Europäisches Patentamt

European Patent Office

Office européen des brevets

(11) Veröffentlichungsnummer: **0 317 788**
**A2**

(12) **EUROPÄISCHE PATENTANMELDUNG**

(21) Anmeldenummer: 88117983.2

(22) Anmeldetag: 28.10.88

(51) Int. Cl.⁴: **B65G 67/60**

(30) Priorität: 25.11.87 DE 3739865

(43) Veröffentlichungstag der Anmeldung:
31.05.89 Patentblatt 89/22

(84) Benannte Vertragsstaaten:
AT BE DE ES FR GB IT NL

(71) Anmelder: **SALZGITTER MASCHINENBAU GMBH**
**Windmühlenbergstrasse 20-22 Postfach 51 16 40**
**D-3320 Salzgitter 51(DE)**

(72) Erfinder: **Seifert, Eberhard**
**Celler Strasse 24e**
**D-3300 Braunschweig(DE)**

(74) Vertreter: **Kosel, Peter, Dipl.-Ing. et al**
**Patentanwälte Dipl.-Inge. Röse, Kosel & Sobisch Odastrasse 4a Postfach 129**
**D-3353 Bad Gandersheim 1(DE)**

(54) Verfahren und Vorrichtung zum Entladen von Stückgütern.

(57) Verfahren und Vorrichtung zum Entladen von Stückgütern.

An einen Hebeförderer (9) ist unten ein Entladekopf (20) angeflanscht. An einem Kopfgehäuse (19) ist um eine senkrechte Achse (25) herum ein ringförmiges Bauteil (34) durch einen Schwenkantrieb (43) schwenkbar. An dem Bauteil (34) ist um eine erste waagerechte Achse (36) wippbar ein teleskopierbarer Förderer (49) angelenkt. Das Teleskopieren geschieht durch ein Scherengitter (77), das an einer äußeren Haltevorrichtung (59) des Förderers (49) angeschlossen ist. Die äußere Haltevorrichtung (59) trägt eine elektronische Steuerung (61) und einen Roboter (60) mit einem Aufnehmer (66) für Stückgüter (37). Eine Bedienungsperson steuert den Aufnehmer (66) entweder von Hand mit einer Steuerung (62) oder automatisch über die elektronische Steuerung (61). Der Förderer (49) übergibt das Stückgut (37) auf ein ringförmiges Drehelement (28), von dem es durch eine Übergabevorrichtung (31) auf einen waagerechten Kurvenförderer (29) geschoben und von diesem auf eine Kopfwendel (30) und schließlich auf eine Förderwendel (15) des Hebeförderers (9) gelangt.

FIG. 2A

## Verfahren und Vorrichtung zum Entladen von Stückgütern

Die Erfindung betrifft zunächst ein Verfahren nach dem Oberbegriff des Anspruchs 1.

Bei einem bekannten Verfahren dieser Art (International Bulk Journal, August 1987, Seite 25 und 34) wird das Stückgut beim Entladen von Hand auf den einzigen Förderer gelegt. Der Förderer fördert das Stückgut zu einem Wendelförderer. Nachteilig sind dabei der große Personalbedarf von 6 bis 8 Mann je nach der Art des zu entladenden Stückguts, ferner die hohe körperliche Beanspruchung des Personals durch das ständige Anheben, Tragen, und Auflegen der bis zu 70 kg schweren Stückgüter auf den Förderer und die sich daraus ergebende verhältnismäßig geringe und auch ungleichmäßige Entladeleistung.

Aus der DE-OS 31 18 803 ist es an sich bekannt, beim erstmalig handgesteuerten Be- und Entladen einer bestimmten Ladefläche mit Stückgut den sich dabei abspielenden Bewegungsablauf einer Be- und Entladevorrichtung 1 in einer Speichereinrichtung 16 zu speichern, so daß er bei wiederholter Be- und Entladung dieser oder einer identischen Ladefläche automatisch beliebig oft zu wiederholen ist.

Der Erfindung liegt die Aufgabe zugrunde, mit geringerem Personalaufwand eine höhere und konstantere Entladeleistung von Stückgütern der verschiedensten Art zu erzielen. Gleichzeitig soll die physische Beanspruchung des Personals verringert werden.

Diese Aufgabe ist nach dem erfindungsgemäßen Verfahren durch die Merkmale des Anspruchs 1 gelöst. Der Roboter entlastet die ihm zugeordnete Bedienungsperson von der schweren körperlichen Arbeit des Anhebens, Tragens und Auflegens der Stückgüter auf den Förderer. Die Bedienungsperson kann jetzt in unmittelbarer Nähe des Beladeendes des Förderers stehen und innerhalb des gesamten Steuerungszyklus seine Handsteuerfunktionen mit ausgezeichneter Sichtkontrolle verrichten. Im gesamten Betriebs- oder Steuerzyklus übernimmt die Automatiksteuerung den bei weitem größten Teil. Dadurch wird eine weitere Entlastung der Bedienungsperson und eine bedeutende Vergleichmäßigung der Entladeleistung erreicht. Im Schritt b) kann z.B. entweder durch Einschaltung durch die Bedienungsperson oder selbsttätig von der Handsteuerung auf die Automatiksteuerung übergegangen werden. Im Schritt g) hat die Bedienungsperson den Aufnehmer nur über eine minimalen Weg von der letzten Aufnehmposition in eine neue Aufnehmposition an dem nächsten aufzunehmenden Stückgut zu bewegen.

Durch die Merkmale des Anspruchs 2 ist ein besserer Übergang zwischen dem Aufnehmer und dem Förderer erreicht.

Gemäß Anspruch 3 wirkt das Drehelement als Puffer zwischen den Förderern und dem Hebeförderer. Der Hebeförderer kann z.B. als mit dem Drehelement konzentrischer Wendelförderer ausgebildet sein.

Die Erfindung betrifft auch eine Vorrichtung gemäß dem Oberbegriff des Anspruchs 4.

Bei einer solchen Vorrichtung ist die zuvor erwähnte Aufgabe durch die Merkmale des Anspruch 4 gelöst. Ausgehend von der Waagerechten kann z.B. der Arbeitsbereich für das Wippen ± 25° betragen. Der Hebeförderer kann z.B. als Wendelförderer ausgebildet sein. Die Steuerung des Roboters kann z.B. von Hand oder selbsttätig durch eine Programm steuerung erfolgen. Der Roboter entlastet die Bedienungsperson von der schweren körperlichen Arbeit des Anhebens, Tragens und Ablegens des Stückguts auf dem Förderer. Die Bedienungsperson hat im wesentlichen den Arbeitsfortschritt des Roboters zu überwachen und bei Bedarf steuernd einzugreifen.

Die Merkmale des Anspruchs 5 werden in vielen Fällen zu befriedigenden Ergebnissen bei hoher Entladeleistung führen.

Zu einem Vorsatzförderer gemäß Anspruch 6 wird man greifen, wenn einerseits die besondere Art des Förderers oder aber besondere räumliche Verhältnisse oder Arten des Stückguts dies wünschenswert erscheinen lassen. Der Vorsatzförderer ist zweckmäßig mit einem eigenen Förderantrieb versehen.

Durch die Merkmale des Anspruchs 7 läßt sich der Wippwinkel des Vorsatzförderers optimal auf das durch den Aufnehmer angelieferte Stückgut einstellen. Dadurch ist eine besonders schnelle und reibungslose Übernahme des Stückguts durch den Vorsatzförderer erleichtert.

Durch die Merkmale des Anspruchs 8 befindet sich der Roboter stets in einer optimalen Relativlage zu dem Beladeende des Förderers.

Mit den Merkmalen des Anspruchs 9 läßt sich der Förderer einerseits in die jeweils günstigste Wippstellung bringen und andererseits, z.B. zum Durchfahren verhältnismäßig enger Ladeluken, in eine nach oben gewippte Ruhestellung gebracht werden. Der Wippantrieb und alle sonstigen Antriebe der Vorrichtung können z.B. elektrische oder pneumatische Linearantriebe sein, wenn es sich bei dem umzuschlagenden Stückgütern durch solche handelt, die durch Hydraulik-Leckflüssigkeit verderben würden. Im anderen Fall wird man hydraulische Kolben-Zylinder-Einheiten für die Antriebe einsetzen.

Gemäß Anspruch 10 ist eine wartungsfreundliche, betriebssichere Art des Teleskopierens des Förderers erreicht. Es können z.B. zwei Scherengitter parallel zueinander angeordnet und betätigt werden.

Mit den Merkmalen des Anspruchs 11 lassen sich die Scherengitter besonders einfach und wirkungsvoll betätigen. Die Teleskopierantriebe sind z.B. an Außengelenken der Scherengitter angelenkt.

Auch gemäß Anspruch 12 ergibt sich eine zuverlässige Betätigung der Scherengitter. Die Hauptebene eines Scherengitters ist diejenige, in der alle Gelenke des Scherengitters liegen.

Die Ruhestellung gemäß Anspruch 13 dient, wie schon angedeutet, einerseits dem Durchfahren verhältnismäßig geringer Öffnungen des zu entladenden Raumes mit der Vorrichtung und andererseits zur Bereitstellung der Vorrichtung bei verhältnismäßig geringem Raumbedarf.

Mit den Merkmalen des Anspruchs 14 ist eine robuste Möglichkeit der Schwenkung des Förderers um die senkrechte Achse geschaffen.

Gemäß Anspruch 15 ergibt sich der besondere Vorteil, daß die für das Schwenken des Förderers um die senkrechte Achse zu bewegende Masse verhältnismäßig gering ist. Der Wagen kann einen steuerbaren und ggf. regelbaren eigenen Fahrantrieb aufweisen.

Durch die Merkmale des Anspruchs 16 ergibt sich eine sehr kompakte, leistungsfähige Konstruktion.

Die Merkmale des Anspruchs 17 ermöglichen es, das Stückgut radial auf das Drehelement aufzugeben. Durch die relativ zu dem Hebeförderer tangentiale Anordnung des Förderers beim Stand der Technik sind nachteilige Kippmomente zu bewältigen. Die Übergabevorrichtung kann z.B. ein oder mehrere angetriebene Bänder aufweisen, die das Stückgut von dem Drehelement zu dem Hebeförderer hin überschieben.

Gemäß Anspruch 18 ergibt sich eine kompakte, raumsparende und funktionssichere Vorrichtung.

Die Merkmale des Anspruch 19 dienen zur sicheren Drehunterstützung des Drehelements.

Gemäß Anspruch 20 sind Winkelbereiche vermieden, in denen anderenfalls der Förderer Stückgut nicht aufnehmen könnte. Ein gesonderter Schwenkantrieb kann für eine einfache und fernsteuerbare Schwenkung der Übergabevorrichtung bei Bedarf sorgen.

Mit den mehreren Förderern gemäß Anspruch 21 läßt sich die Vorrichtung jedem gewünschten Leistungsbedarf anpassen. Die Zuleiferung der Stückgüter durch die einzelnen Förderer auf das Drehelement geschieht "auf Lücke" mit an sich bekannten Steuerungsmitteln. Dadurch ist ausgeschlossen, daß ein Förderer sein Stückgut in Kollision mit einem schon auf dem Drehelement befindlichen Stückgut fördert.

Durch die Merkmale des Anspruchs 22 ist eine hohe Entladeleistung und sicheres Aufnehmen aller anfallenden Stückgutarten gewährleistet. Der Aufnehmer wird je nach dem zu entladenden Stückgut gewechselt und jeweils an dem Kupplungsstück des Roboters angeschlossen.

Der besondere Roboter gemäß Anspruch 23 gestattet eine problemlose Handhabung aller praktisch vorkommenden Arten von Stückgütern mit hoher Entladeleistung. Die erste Achse ist vorzugsweise senkrecht angeordnet.

Gemäß Anspruch 24 ergibt sich eine besonders schlanke Bauweise des Roboterauslegers.

Mit den Merkmalen des Anspruchs 25 lassen sich unterschiedliche Aufnehmer besonders leicht an das Kupplungsstück anschließen.

Gemäß Anspruch 26 ist ein kompakter Aufnehmer für diejenigen Stückgutarten geschaffen, die sich günstig mit einem Vakuumaufnehmer handhaben lassen. Durch geeignete Steuerungsmittel läßt sich erreichen, daß das Vakuum selbsttätig aufgehoben und das Stückgut von dem Vakuumaufnehmer freigegeben wird, sobald das Stückgut in seiner Übergabeposition angelangt ist.

Die Merkmale des Anspruchs 27 kennzeichnen einen Aufnehmer, der besonders geeignet für Stückgüter wie Jute- und Sisalsäcke ist. Die Haltekrallen sind so bemessen, daß sie zwar das Stückgut sicher halten, jedoch den Inhalt nicht beeinträchtigen.

Gemäß Anspruch 28 ergibt sich eine besonders günstige Haltewirkung der Haltekrallen.

Mit den Merkmalen des Anspruchs 29 ergibt sich ein besonders einfacher Betätigungsmechanismus für die Haltekrallen.

Gemäß Anspruch 30 lassen sich die Haltekrallen auf vorteilhafte Weise gleichzeitig in und außer Eingriff mit dem Stückgut bewegen.

Die Merkmale des Anspruchs 31 fordern ein sicheres Lösen der Haltekrallen von dem Stückgut bei dessen Abgabe von dem Roboter.

Weitere Merkmale und Vorteile der Erfindung ergeben sich aus der nachfolgenden Figurenbeschreibung, in der die Erfindung anhand mehrerer Ausführungsbeispiele näher erläutert wird. Es zeigt:

Fig. 1 eine Seitenansicht eines Teils eines Portalkrans auf einem Hafenkai mit einem Wendelförderer und einem Teil einer erfindungsgemäßen Vorrichtung in einem Schiffsrumpf.

Fig. 2A und Fig. 2B jeweils eine Hälfte einer Seitenansicht des unteren Endes des Wendelförderers mit einer erfindungsgemäßen Vorrichtung,

Fig. 3 im wesentlichen die Ansicht gemäß Fig. 2A mit in eine Ruhestellung hochgewipptem Förderer,

Fig. 4 ein Fig. 2B entsprechender Teil einer anderen Ausführungsform der Vorrichtung,

Fig. 5 im wesentlichen die Schnittansicht nach den Linien V-V in den Fig. 2A und 2B,

Fig. 6 hälftige Seitenansicht und Hälftiger Längsschnitt durch den mittleren Teil einer anderen Ausführungsform der Vorrichtung,

Fig. 7 Einzelheiten eines Vorsatzförderers zum Förderer in gegenüber Fig. 2B vergrößerter Darstellung,

Fig. 8 eine Seitenansicht eines besonderen Aufnehmers an einem Roboter der Vorrichtung,

Fig. 9 die Schnittansicht nach Linie IX-IX in Fig. 8,

Fig. 10 eine andere Ausführungsform des Aufnehmers gemäß Fig. 8 und 9 im Längsschnitt,

Fig. 11 eine perspektivische Ansicht einer anderen Ausführungsform des Roboters und

Fig. 12 eine Seitenansicht des Roboters gemäß Fig. 11 mit einem besonderen Aufnehmer im Betrieb.

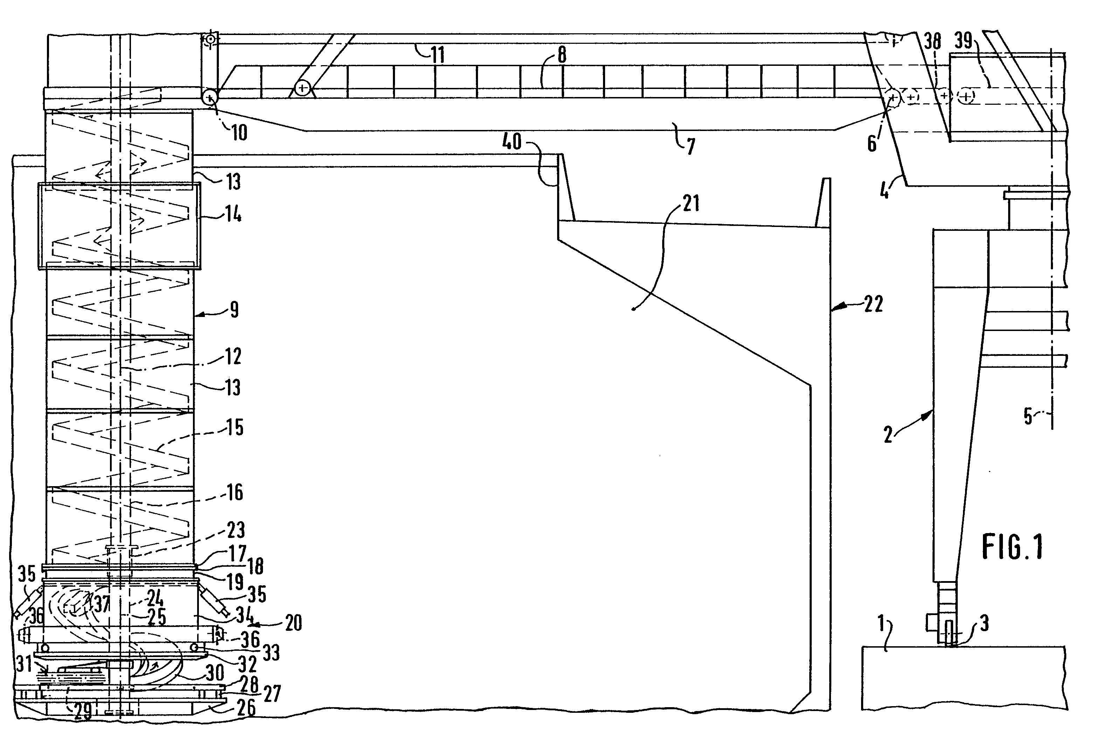

In Fig. 1 ist auf einem Hafenkai 1 ein Portalkran 2 auf Schienen 3 verfahrbar, von denen nur eine gezeigt ist. Ein starrer Ausleger 4 ist ebenfalls nur teilweise gezeichnet und um eine Hochachse 5 schwenkbar. An dem starren Ausleger 4 ist ein um eine waagerechte Achse 6 wippbarer Ausleger 7 angelenkt. Der Ausleger 7 trägt einerseits über seine gesamte Länge einen Auslegerförderer 8 und andererseits an seinem freien Ende an einer waagerechten Achse 10 angelenkt einen als Wendelförderer ausgebildeten Hebeförderer 9. Eine Parallelogrammstange 11 zwischen dem starren Ausleger 4 und dem Hebeförderer 9 hält die Längsachse 12 des Hebeförderers unabhängig von der Wippstellung des Auslegers 7 stets senkrecht.

Ein Gehäuse 13 des Hebeförderers 9 ist im oberen Bereich unterbrochen und dort durch eine Gewindehülse 14 zur Gezeitenhubanpassung überbrückt.

Im Inneren des Gehäuses 13 befindet sich eine Förderwendel 15 und innerhalb dieser ein Zentralrohr 16 des Hebeförderers 9. An einen unteren Endflansch 17 des Gehäuses 13 ist ein oberer Flansch 18 eines Kopfgehäuses 19 eines Entladekopfes 20 angeschraubt.

Der Hebeförderer 9 ist mit seinem Enladekopf 20 in einen Raum 21, nämlich den Laderaum eines Schiffes 22, eingetaucht.

An dem stationären Zentralrohr 16 ist über eine Kupplung 23 ein Tragrohr 24 des Entladekopfes 20 befestigt. Das Tragrohr 24 weist als Längsachse eine senkrechte Achse 25 auf, die mit der Längsachse 12 fluchtet.

Am unteren Ende des Tragrohrs 24 ist ein scheibenförmiges Tragelement 26 befestigt, auf dem mit wenigstens zum Teil antreibbaren Rollen 27 ein ringförmig ausgebildetes Drehelement 28 drehend antreibbar gelagert ist. Innerhalb des Drehelements 28 ist auf einem Teil des Umfangs ein waagerechter Kurvenförderer 29 angeordnet. Die Förderverbindung zwischen dem Kurvenförderer 29 und der Förderwendel 15 wird durch eine Kopfwendel 30 des Entladekopfes 20 hergestellt. Oberhalb des Kurvenförderers 29 ist eine Übergabevorrichtung 31 um die senkrechte Achse 25 schwenkend einstellbar angeordnet.

Auf einem unteren Außenflansch 32 des Kopfgehäuses 19 ist über eine Kugeldrehverbindung 33 ein als Ring ausgebildetes, um die senkrechte Achse 25 schwenkbares Bauteil 34 gelagert. An dem Bauteil 34 sind oben diametral gegenüberliegend zu einem später im einzelnen zu beschreibenden Zweck Wippantriebe 35 angelenkt. Unterhalb der Wippantriebe 35 sind an dem Bauteil 34 erste waagerechte Achsen 36 definiert. Stückgüter 37, z.B. Kartons, Kisten, Plastik- oder Jutesäcke, Fässer, Kleincontainer, gelangen auf später zu beschreibende Weise zunächst auf das Drehelement 28 und werden von diesem im Kreis mitgenommen bis zur Berührung mit der Übergabevorrichtung 31, die die Stückgüter 37 auf den waagerechten Kurvenförderer 29 überführt. Der Kurvenförderer 29 seinerseits übergibt die Stückgüter 37 an die Kopfwendel 30 und diese an die Fördelwendel 15, bis die Stückgüter am oberen Ende der Förderwendel 15 an den Auslegerförderer 8 übergeben werden. Von dort findet der Transport seine Fortsetzung über Förderer 38 und 39 des Portalkrans 2 sowie weitere, nicht dargestellte Förderer.

In Fig. 1 ist auch eine Ladeluke 40 des Schiffes 22 zu sehen, durch die hindurch der Hebeförderer 9 mit dem Entladekopf 20 in den Raum 21 abgesenkt und aus dem Raum 21 wieder entfernt werden kann.

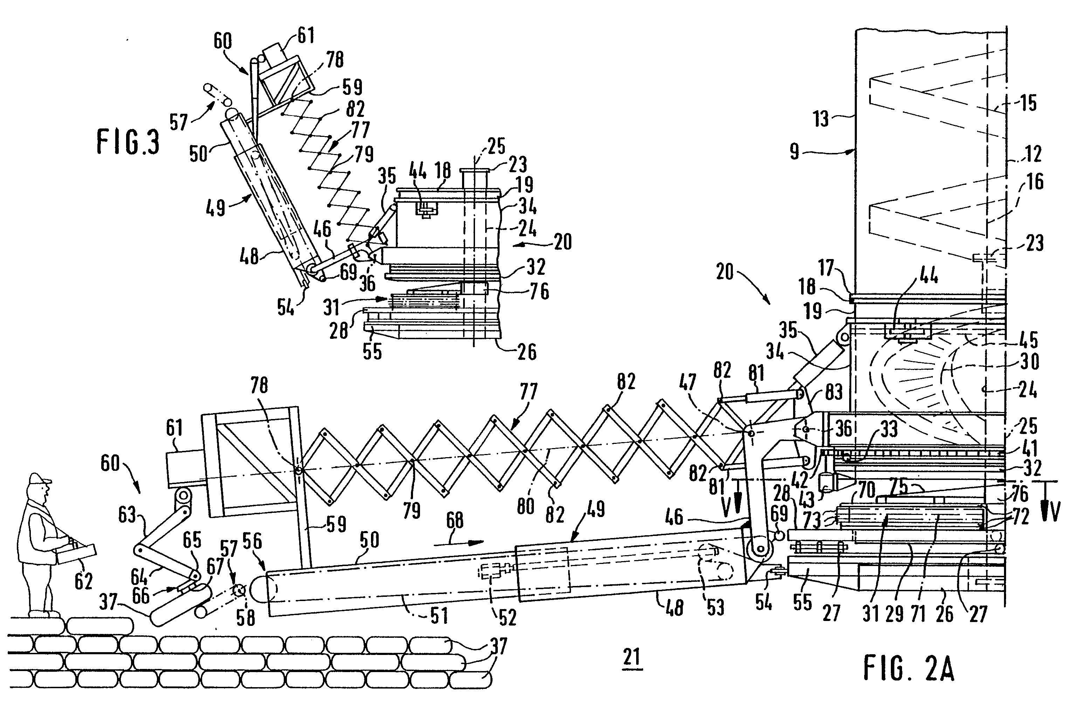

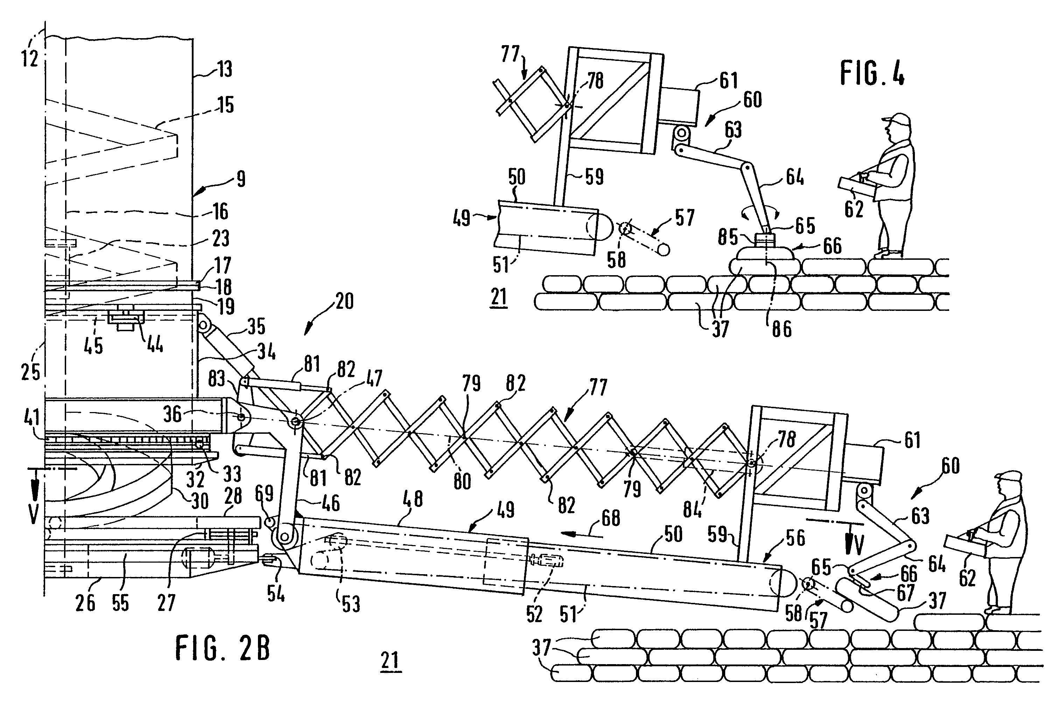

Fig. 2A und 2B verdeutlichen und ergänzen Merkmale des Entladekopfes 20.

Das Bauteil 34 ist unten mit einem Außenzahnkranz 41 versehen, in den ein Ritzel 42 eines Schwenkantriebs 43 eingreift, der an dem unteren Außenflansch 32 des Kopfgehäuses 19 befestigt ist. An dem Bauteil 34 sind oben mehrere über den Umfang verteilte Laufrollen 44 gelagert, die sich zum Inneren des Bauteils 34 in radial stützende Berührung mit einer Umfangslaufschiene 45 des Kopfgehäuses 19 erstrecken. Auf diese Weise ist das Bauteil 34 durch die Kugeldrehverbindung 33 in axialer Richtung schwenkbar gelagert und durch die Laufrollen 44 in radialer Richtung bei der Schwenkung und die senkrechte Achse 25 abgestützt.

Ein Ende einer in der Seitenansicht der Fig. 2A und 2B L-förmigen inneren Haltevorrichtung 46 ist um die erste waagerechte Achse 36 wippbar gelagert. Zum Wippen sind an jeder inneren Haltevorrichtung 46 in seitlichem Abstand voneinander zwei Wippantriebe 35 an einer im Abstand außerhalb der ersten waagerechten Achse 36 angeordneten waagerechten Achse 47 der inneren Haltevorrichtung 46 angelenkt.

Das andere Ende jeder inneren Haltevorrichtung 46 ist an einem innersten Teleskopteil 48 eines als Teleskopförderer ausgebildeten Förderers 49 befestigt. Ein äußerstes Teleskopteil 50 ist in das innerste Teleskopteil 48 teleskopierbar, wobei eine Förderband 51 durch eine durch einen Antrieb 52 linear antreibbare Umlenkrolle 53 stramm gehalten wird.

Der Förderer 49 ist in den Fig. 2A und 2B jeweils in seiner tiefsten, um die erste waagerechte Achse 36 gewippten Stellung dargestellt. In dieser tiefsten Wippstellung ist der Förderer 49 jeweils leicht nach außen und unten geneigt und stützt sich jeweils mit zwei in Umfangsrichtung im Abstand voneinander angeordneten Stützrollen 54 an einer Umfangslaufbahn 55 des Tragelements 26 ab.

Unmittelbar vor einem Beladeende 56 des Förderers 49 ist ein Vorsatzförderer 57 angeordnet, der in zu Fig. 7 im einzelnen zu beschreibender Weise um eine in der Nähe des Beladeendes 56 angeordnete zweite waagerechte Achse 58 wippbar an dem äußersten Teleskopteil 50 gelagert ist. Der Vorsatzförderer 57 kann daher in seiner Wippstellung relativ zu dem äußersten Teleskopteil 50 optimal eingestellt werden.

An dem äußersten Teleskopteil 50 ist eine sich nach oben erstreckende äußere Haltevorrichtung 59 befestigt, an der außen ein Roboter 60 befestigt ist. Der Roboter 60 weist eine elektronische Steuerung 61 auf, die, in diesem Fall drahtlos, Steuersignale von einer durch eine Bedienungsperson tragbaren und betätigbaren Steuerung 62 empfängt.

Der Roboter 60 selbst ist von üblicher Bauart mit gelenkigen Armen 63 und 64 und insgesamt den nötigen Freiheitsgraden zur Handhabung der Stückgüter 37. Am äußeren oder freien Ende des Arms 64 befindet sich ein Kupplungsstück 65 für einen Aufnehmer 66, der z.B. gemäß den Fig. 8 und 9 oder 10 ausgebildet sein kann. Der Aufnehmer 66 weist Haltekrallen 67 auf, die sich an dem im vorliegenden Fall als Jutesack ausgebildeten Stückgut 37 festkrallen und dessen Aufnehmen und Transport zu einer Übergabeposition oberhalb des Vorsatzförderers 57 gestatten.

Das Entladen der Stückgüter 37 aus dem Raum 21 geschieht gemäß den Fig. 2A und 2B gleichzeitig mit den beiden Förderern 49 in folgender Weise:

Der Roboter 60 und sein Aufnehmer 66 werden durch die Bedienungsperson durch Handsteuerung mit der Steuerung 62 in eine Aufnehmposition an dem aufzunehmenden Stückgut 37 bewegt. Sodann wird, z.B. durch Einschaltung durch die Bedienungsperson oder auch selbsttätig, auf eine Automatiksteuerung durch die elektronische Steuerung 61 übergegangen. Das Programm für diese Automatiksteuerung ist im Bereich der elektronischen Steuerung 61 abgelegt und in an sich bekannter Weise verfügbar und auch änderbar. Durch die Programmsteuerung laufen folgende Schritte selbsttätig ab:

Der Aufnehmer 66 nimmt das aufzunehmende Stückgut 37 auf, indem seine Haltekrallen 67 in das Jutegewebe des Stückguts 37 gekrallt werden;

der Roboter 60 bewegt das aufgenommene Stückgut 37 zu einer Übergabeposition oberhalb des Vorsatzförderers 57. Ist ein solcher Vorsatzförderer 57 nicht vorhanden, wird in diesem Schritt das aufgenommene Stückgut 37 in eine Übergabeposition oberhalb des Beladeendes 56 des Förderers 49 bewegt;

der Aufnehmer 66 gibt das Stückgut 37 in der Übergabeposition frei; und

der Roboter 60 bewegt den Aufnehmer 66 zurück in die zuvor erwähnte Aufnehmposition.

Danach übernimmt die Bedienungsperson den Roboter 60 mit dem Aufnehmer 66 in Handsteuerung durch die Steuerung 62 und fährt den Aufnehmer 66 in eine neue Aufnehmposition an einem weiteren aufzunehmenden Stückgut 37, worauf sich die vorerwähnten Schritte der Automatiksteuerung wiederholen.

Gemäß Fig. 2A wird das Stückgut 37 auf dem Förderband 51 in Richtung eines Pfeils 68 transportiert und über eine Übergaberolle 69 auf das Drehelement 28 befördert. Die Übergaberolle 69 ist an Haltearmen des innersten Teleskopteils 48 drehbar gelagert.

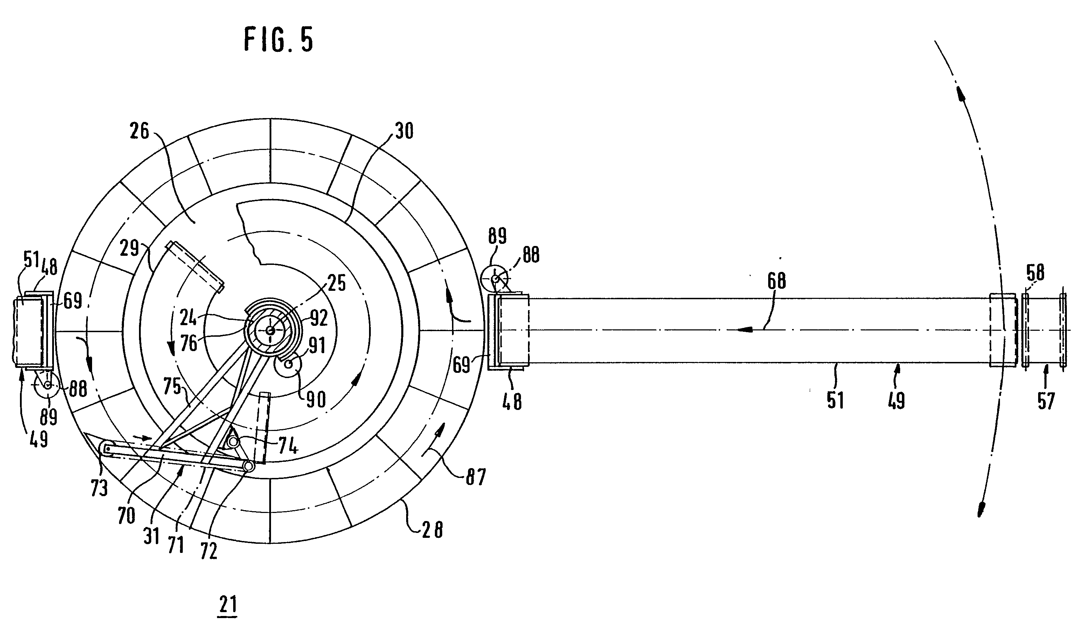

Die Übergabevorrichtung 31 streift gewissermaßen das Stückgut 37 von dem Drehelement 28 ab auf den waagerechten Kurvenförderer 29. Die Übergabevorrichtung 31 weist einen Rahmen 70 und indem Rahmen 70 drei übereinander angeordnete Treibriemen 71 auf. Die Treibriemen 71 sind jeweils über Umlenkrollen 72 und 73 des Rahmens 70 geführt. Die Umlenkrollen 72 sind auf einer gemeinsamen, senkrechten Welle befestigt, die durch einen Antrieb 74 (Fig. 5) drehend antreibbar ist. Der Antrieb 74 ist an einem Träger 75 montiert, der seinerseits an einer Nabe 76 befestigt ist. Die Nabe 76 ist gemäß Fig. 5 um die senkrechte Achse 25 schwenkend antreibbar an dem Tragrohr 24 gelagert.

Das Teleskopieren der Förderer 49 geschieht jeweils über ein Scherengitter 77. das einerseits an der waagerechten Achse 47 der inneren Haltevorrichtung 46 und andererseits an einer waagerechten Achse 78 der äußeren Haltevorrichtung 59 angelenkt ist. Bei Bedarf können auch noch ein oder mehrere weitere Scherengitter parallel zu dem Scherengitter 77 zum Teleskopieren jedes Förderers 49 eingesetzt werden. Alle Mittelgelenke 79 des Scherengitters 77 liegen auf der Längsachse 80 des Scherengitters 77.

Gemäß Fig. 2A sind zwei Teleskopierantriebe 81 einerseits jeweils an einem Außengelenk 82 des Scherengitters 77 außerhalb dessen Längsachse 80 und andererseits an Fortsätzen 83 der inneren Haltevorrichtung 46 angelenkt. Bei den Teleskopierantrieben 81 handelt es sich um lineare Antriebe, deren Betätigung ein Ausstrecken oder Einziehen des Scherengitters 77 mit entsprechendem Teleskopieren des Förderers 49 zur Folge hat.

In Fig. 2B ist zusätzlich zu den beiden Teleskopierantrieben 81, 81 gestrichelt ein weiterer Teleskopierantrieb 84 eingetragen. Ein oder mehrere derartige Teleskopierantriebe 84 können allein oder zusätzlich zu den Teleskopierantrieben 81,81 außerhalb einer alle Gelenke 79, 82 des Scherengitters 77 enthaltenden Hauptebene des Scherengitters 77 einerseits an der waagerechten Achse 78 der äußeren Haltevorrichtung 59 und andererseits an einem de Mittelgelenke 79 des Scherengitters 77 angelenkt sein. Durch Betätigung der linearen Teleskopierantriebe 84 wird das Teleskopieren des Förderers 49 erreicht oder unterstützt.

Wenn die Ladeluken 40 (Fig. 1) verhältnismäßig eng sind, kann die radiale Erstreckung auch der ineinander teleskopierten Förderer 49 zu groß sein. Die Förderer 49 sind daher zusammen mit ihren Robotern 60 und den Scherengittern 77 gemäß Fig. 3 in eine Ruhestellung nach oben um die erste waagerechte Achse 36 wippbar. In dieser Ruhestellung ist die waagerechte Erstreckung der gesamten Vorrichtung so klein, daß die Vorrichtung ohne weiteres und ohne große Aufmerksamkeit des Bedienungspersonals auch durch verhältnismäßig enge Ladeluken 40 in den Raum 21 eingebracht oder daraus entfernt werden kann. Die Ruhestellung gemäß Fig. 3 ergibt sich durch Betätigung der Wippantriebe 35.

In Abweichung von der Darstellung in den Fig. 2A und 2B kann der Entladekopf 20 auch nur einen Förderer 49 aufweisen. Diametral gegenüber diesem einen Förderer 49 wäre dann zum Momentenausgleich ein Gegengewicht an dem Bauteil 34 anzubringen.

In Fig. 3 ist der Förderer 49 in seiner ineinander teleskopierten Stellung gezeigt, die die kürzeste Längserstreckung aufweist. Gleichzeitig ist das Scherengitter 77 maximal zusammengeschoben.

Bei dem Ausführungsbeispiel nach Fig. 4 ist der an das Kupplungsstück 65 des Roboters 60 angeschlossene Aufnehmer 66 als Vakuumaufnehmer ausgebildet. In einem Kopf 85 des Aufnehmers 66 ist einerseits eine Vakuumpumpe und andererseits ein Drehantrieb untergebracht, der ein Drehen des Aufnehmers 66 um seine Hochachse 86 ermöglicht. Die Vakuumpumpe und der Drehantrieb können entweder von der elektronischen Steuerung 61 oder von der Steuerung 62 aus betätigt werden. Eine Drehung um die Hochachse 86 kommt z.B. dann in Betracht, wenn die Stückgüter 37 in der Länge größer als in der Breite sind und in einer Vorzugsorientierung auf den Vorsatzförderer 57 aufgebracht werden müssen. Fig. 4 deutet an, daß aufeinanderfolgende Lagen der Stückgüter 37 mit der Längsachse jeweils um 90° zueinander versetzt gepackt sind.

In Fig. 5 sind die beiden diametral gegenüber einander angeordneten Förderer 49 vereinfacht dargestellt. Es sind im wesentlichen die Förderbänder 51 gezeichnet. Gleiches gilt für den Vorsatzförderer 57.

Bezogen auf die Umlaufrichtung des Drehelements 28, die durch einen Pfeil 87 gekennzeichnet ist, befindet sich an jedem Förderer 49 neben der Übergaberolle 69 eine um eine senkrechte Achse 88 drehbar gelagerte Ablenkrolle 89. Die Ablenkrollen 89 sind jeweils an dem zugehörigen innersten Teleskopteil 48 des Förderers 49 gelagert und haben die Aufgabe, das Förderband 51 verlassende Stückgüter ordnungsgemäß auf das Drehelement 28 abzulenken.

Fig. 5 läßt erkennen, daß der innere Trum jedes Treibriemens 71 im wesentlichen tangential zu dem waagerechten Kurvenförderer 29 angeordnet ist und sich praktisch über die gesamte Breite des Drehelements 28 erstreckt. Dadurch kann die Übergabevorrichtung 31 die in Pfeilrichtung ankommenden Stückgüter sicher auf den Kurvenförderer 29 überschieben.

Um auch den Bereich in dem Raum 21 radial außerhalb der Übergabevorrichtung 31 mit einem der Förderer 49 erreichen und entladen zu können, ist der Träger 75 mit seiner Nabe 76 um die senkrechte Achse 25 schwenkbar an dem Tragrohr 24 gelagert. Die Schwenkung besorgt ein an dem Tragrohr 24 befestigter Schwenkantrieb 90, dessen Ritzel 91 in ein an der Nabe 76 befestigtes Zahnsegment 92 eingreift. Auf diese Weise läßt sich die Übergabevorrichtung 31, ausgehend von der in Fig. 5 gezeigten Endstellung im Uhrzeigersinn soweit schwenken, daß auf dem Drehelement 28 ankommende Stückgüter gerade noch sicher auf den Kurvenförderer 29 übergeschoben werden können.

In allen Ausführungsformen sind gleiche Teile mit gleichen Bezugszahlen versehen.

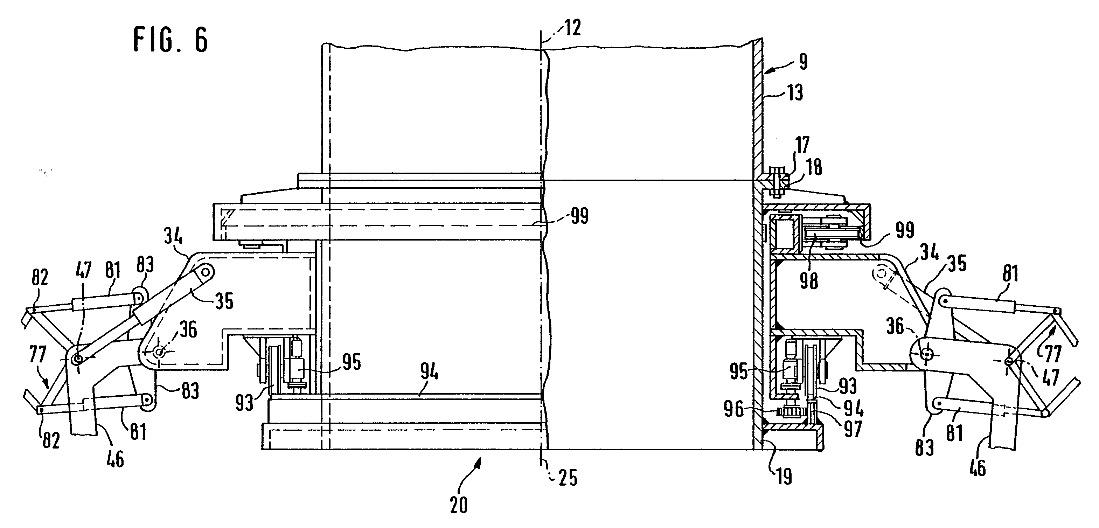

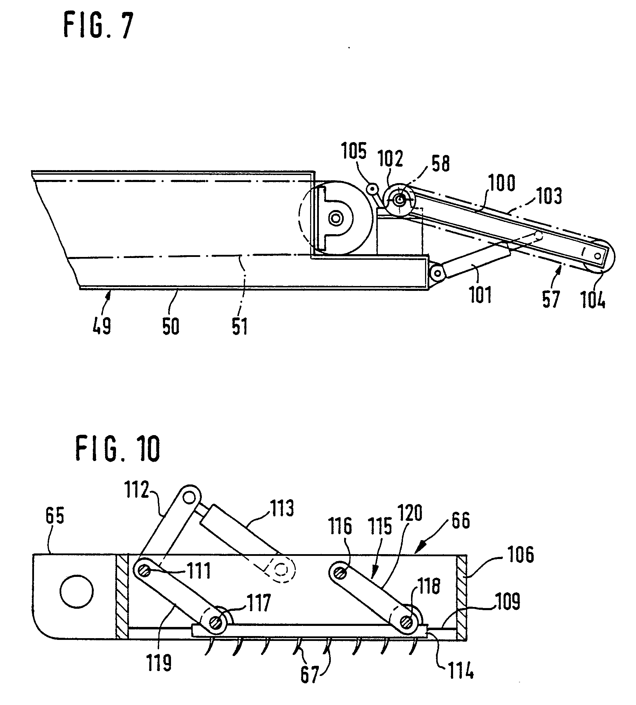

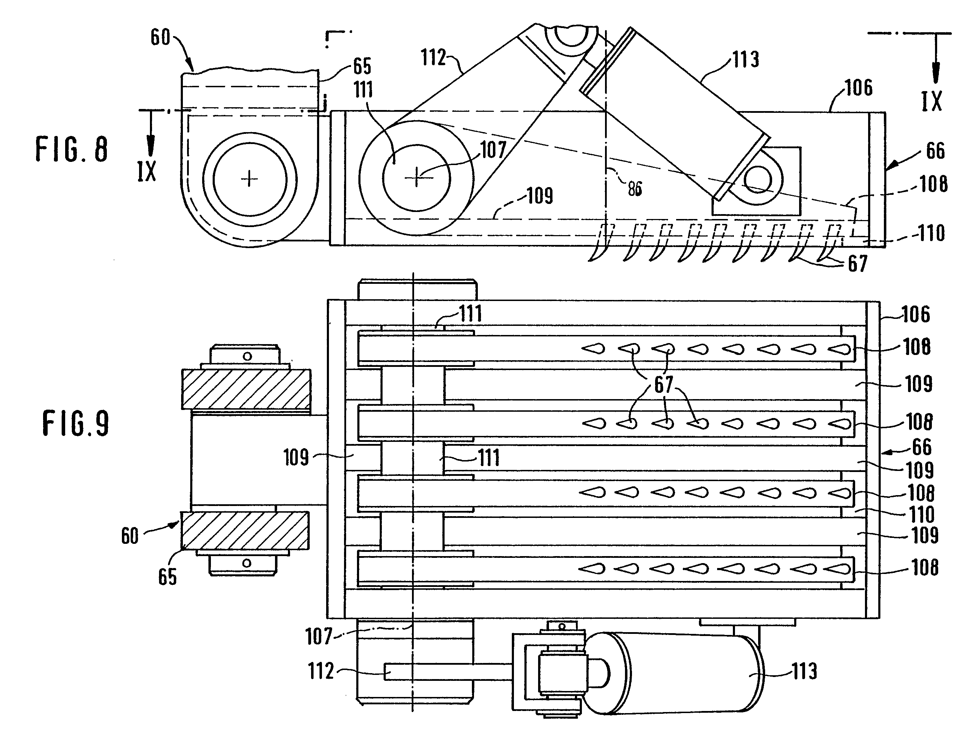

In Fig. 6 sind zwei voneinander getrennte Bauteile 34 vorgesehen und jeweils als um die senkrechte Achse 25 verfahrbarer Wagen ausgebildet. Jedes Bauteil 34 weist zwei im Umfangsabstand voneinander angeordnete Laufräder 93 auf, die auf einer kreisförmigen, mit der senkrechten Achse 25 konzentrischen Laufschiene 94 des Kopfgehäuses 19 abrollen. Jedes Bauteil 34 besitzt einen Schwenkantrieb 95, dessen Ritzel 96 in eine kreisförmige, zu der senkrechten Achse 25 konzentri-

sche Zahnschiene 97 eingreift. Jedes Bauteil 34 gemäß Fig. 6 weist ferner oben eine Stützrolle 98 mit senkrechter Achse auf, die außen auf einer kreisförmigen, zu der senkrechten Achse 25 konzentrischen Stützschiene 99 des Kopfgehäuses 19 abrollt.

Die wagenartigen Bauteile 34 gemäß Fig. 6 ermöglichen es den zugehörigen, nicht dargestellten Förderern ent sprechend den Förderern 49 in den Fig. 2A und 2B, unabhängig voneinander um die senkrechte Achse 25 zu schwenken. Die beiden Förderer gemäß Fig. 6 sind also nicht stets diametral zueinander angeordnet.

Es können auch sowohl bei dem Ausführungsbeispiel nach Fig. 2A und 2B als auch bei dem Ausführungsbeispiel nach Fig. 6 mehr als zwei Förderer 49 an dem Endladekopf 20 vorgesehen sein.

In den vorangegangenen Figuren ist der Vorsatzförderer 57 jeweils nur schematisch dargestellt worden. Seine Einzelheiten zeigt Fig. 7. Der Vorsatzförderer 57 weist einen um die zweite waagerechte Achse 58 wippbaren Rahmen 100 auf, wobei die zweite waagerechte Achse 58 Bestandteil des äußersten Teleskopteils 50 ist. Das Wippen geschieht durch wenigstens einen Wippantrieb 101, der einerseits an dem äußersten Teleskopteil 50 und andererseits an dem Rahmen 100 angelenkt ist.

Entlang der zweiten waagerechten Achse 58 befindet sich eine Antriebswalze 102 für einen endlosen Gurt 103 mit hinreichend griffiger Oberfläche. Am anderen Ende des Rahmens 100 ist eine Umlenkwalze 104 für den Gurt 103 drehbar gelagert. Der Antrieb erfolgt durch einen innerhalb der Antriebswalze 102 angeordneten, im einzelnen nicht dargestellten Elektrotrommelmotor. Zwischen der Antriebswalze 102 und dem Förderband 51 ist eine Übergaberolle 105 zur Überbrückung des Zwischenraums drehbar angeordnet.

Bei dem Ausführungsbeispiel nach Fig. 8 und 9 ist ein besonderer Aufnehmer 66 mit dem Kupplungsstück 65 des Roboters 60 gekuppelt. Der Aufnehmer 66 weist einen rahmenartigen Niederhalter 106 auf und relativ zu dem Niederhalter 106 in und außer Eingriff mit dem Stückgut bewegbare Haltekrallen 67. Die Haltekrallen 67 sind. gegenüber der Senkrechten zu der Übergabeposition am Förderer 49 (s. z.B. Fig. 2A und 2B) hin gekrümmt. Die Haltekrallen 67 sind an vier relativ zu dem Niederhalter 106 um eine Schwenkachse 107 schwenkbaren Armen 108 festgelegt. Die Schwenkachse 107 ist an einem der Übergabeposition zugewandten Endbereich des Niederhalters 106 vorgesehen. Zwischen benachbarten Armen 108 ist jeweils eine Traverse 109 des Niederhalters 106 angeordnet. Eine sich quer erstreckende Anschlagschiene 110 des Niederhalters 106 begrenzt den Schwenkweg der Arme 108 nach unten in der in den Fig. 8 und 9 dargestellten Betriebsstellung mit ausgefahrenen Haltekrallen 67.

Alle Arme 108 sind auf einer zu der Schwenkachse 107 konzentrischen Welle 111 befestigt, die in Seitenwänden des Niederhalters 106 schwenkbar gelagert ist. Außerhalb des Niederhalters 106 ist an einem Ende der Welle 111 ein Hebel 112 befestigt, der durch einen andererseits an dem Niederhalter 106 angelenkten Schwenkantrieb 113 hin und her schwenkbar ist.

Die gemäß Fig. 8 und 9 ausgefahrenen Haltekrallen 67 halten z.B. Jutesäcke als Stückgüter sicher fest bis der Roboter 60 mit dem Aufnehmer 66 die Übergabeposition, z.B. oberhalb des Vorsatzförderers 57 in Fig. 2A und 2B, erreicht hat. Dort werden durch Betätigung des Schwenkantriebs 113 alle Ame 108 gleichzeitig hochgeschwenkt, wobei der Niederhalter 106 und seine Traversen 109 das Stückgut zurückhalten, während sich die Haltekrallen 67 zunehmend von dem Stückgut trennen.

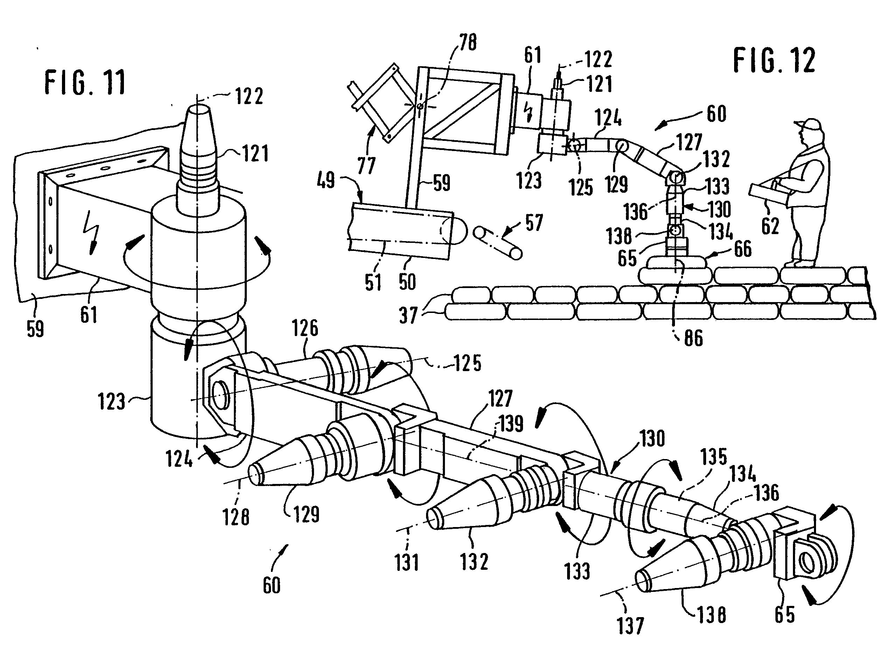

Bei dem Ausführungsbeispiel nach Fig. 10 sind die Arme 108 gemäß den Fig. 8 und 9 ersetzt durch die Haltekrallen 67 tragende Stangen 114. Jede Stange 114 ist an einer Parallelogrammführung 115 des Niederhalters 106 angelenkt.

Die Parallelogrammführung 115 weist außer der Welle 111 eine in den äußeren Seitenwänden des Niederhalters 106 festgelegte Achse 116 und zwei innerhalb der Seitenwände des Niederhalters 106 durchgehende Achsen 117 und 118 auf. Die Stangen 114 sind an den Achsen 117, 118 aufgehängt. In seitlichem Abstand voneinander sind an der Welle 111 zwei Laschen 119 befestigt, die andererseits an der Achse 117 schwenkbar gelagert sind. Wenigstens eine gleich ausgebildete Lasche 120 ist gelenkig an den Achsen 116, 118 gelagert.

Die tiefste oder Betriebsstellung der Stangen 114 mit ausgefahrenen Haltekrallen 67 wird in dem Fall der Fig. 10 dadurch definiert, daß die Achsen 117,118 oben auf den Traversen 109 aufliegen. Soll bei dem Ausführungsbeispiel nach Fig. 10 das durch die Haltekrallen 67 gehaltene Stückgut in der Übergabeposition freigegeben werden, wird der Schwenkantrieb 113 betätigt und schwenkt den Hebel 112 und damit die Welle 111 und die Parallelogrammführung 115 im Gegenuhrzeigersinn. Dabei übt der Niederhalter 106 mit den Traversen 109 die vorerwähnte Niederhaltefunktion auf das Stückgut aus. Vorteilhaft ist bei Fig. 10, daß alle Haltekrallen 67 gleichzeitig in und außer Eingriff mit dem Stückgut treten.

In den Fig. 11 und 12 ist ein besonderer Roboter 60 dargestellt.

An einem Gehäuse der elektronischen Steuerung 61 ist in diesem Fall ein erster Motor 121 mit senkrecht angeordneter erster Achse 122 befestigt. Der erste Motor 121 treibt ein Fußstück 123 des Roboters 60 um die erste Achse 122 drehend an. An dem Fußstück 123 ist ein erster Arm 124 um eine zu der ersten Achse 122 rechtwinklige zweite Achse 125 durch einen zweiten Motor 126 schwenkbar angelenkt. An dem ersten Arm 124 ist ein zweiter Arm 127 um eine zu der zweiten Achse 125 parallele dritte Achse 128 durch einen dritten Motor 129 schwenkbar angelenkt. An dem zweiten Arm 127 ist ein dritter Arm 130 um eine zu der dritten Achse 128 parallele vierte Achse 131 durch einen vierten Motor 132 schwenkbar angelenkt. Der dritte Arm 130 weist einen Anschlußteil 133 und einen Abtriebsteil 134 auf, wobei der Abtriebsteil 134 durch einen fünften Motor 135 relativ zu dem Anschlußteil 133 um eine zu der vierten Achse 131 rechtwinklige fünfte Achse 136 drehbar ist. An dem Abtriebsteil 134 ist das Kupplungsstück 65 für den Aufnehmer 66 (Fig. 12) um eine zu der fünften Achse 136 rechtwinklige sechste Achse 137 durch einen sechsten Motor 138 schwenkbar angelenkt.

Die fünfte Achse 136 liegt in einer Ebene durch die Längsachse 139 des zweiten Arms 127.

Gemäß Fig. 11 ist das Kupplungsstück 65 derart rechtwinklig ausgebildet, daß die Hochachse 86 (Fig. 12) des mit dem Kupplungsstück 65 gekuppelten Aufnehmers 66 zumindest annähernd parallel zu einer Ebene durch die fünfte Achse 136 verläuft.

## Ansprüche

1. Verfahren zum Entladen von Stückgütern (37) aus einem Raum (21), z.B. aus einem Laderaum eines Schiffes (22), bei dem das Stückgut (37) auf einen Förderer (49) gebracht wird, gekennzeichnet durch folgende Schritte:

a) Ein Aufnehmer (66) eines mit dem Förderer (49) verbundenen Roboters (60) wird durch eine Bedienungsperson durch Handsteuerung (62) in eine Aufnehmposition an einem aufzunehmenden Stückgut (37) bewegt,

b) es wird auf eine Automatiksteuerung (61) übergegangen, durch die folgende Schritte selbsttätig ablaufen,

c) der Aufnehmer (66) nimmt das aufzunehmende Stückgut (37) auf,

d) der Roboter (60) bewegt das aufgenommene Stückgut (37) zu einer Übergabeposition am Förderer (49),

e) der Aufnehmer (66) gibt das Stückgut (37) in der Übergabeposition frei und

f) der Roboter (60) bewegt den Aufnehmer (66) zurück in die Aufnehmposition, und

g) die Bedienungsperson bewegt den Aufnehmer (66) durch Handsteuerung (62) in eine neue Aufnehmposition an einem weiteren aufzunehmenden Stückgut (37), worauf sich die Schritte b) bis g) ständig wiederholen.

2. Verfahren nach Anspruch 1, dadurch gekennzeichnet, daß der Roboter (60) im Schritt d) das Stückgut (37) zu der Übergabeposition oberhalb eines durch den Förderer (49) getragenen Vorsatzförderers (57) bewegt, daß sich dann Schritt e) anschließt, und daß das freigegebene Stückgut (37) durch den Vorsatzförderer (57) selbsttätig zu dem Förderer (49) hin gefördert und an den Förderer (49) übergeben wird.

3. Verfahren nach Anspruch 1 oder 2, gekennzeichnet durch die folgenden weiteren Schritte:

h) Das Stückgut (37) wird von wenigstens einem zumindest annähernd waagerecht fördernden Förderer (49) gemäß den Ansprüchen 1 oder 2 an ein umlaufendes Drehelement (28) übergeben, und

i) das Stückgut (37) wird von dem Drehelement (28) an einen nach oben fördernden Hebeförderer (9) übergeben.

4. Vorrichtung zum Entladen von Stückgütern (37) aus einem Raum (21), z.B. aus einem Laderaum eines Schiffes (22), bei der das Stückgut (37) auf einen teleskopierbaren, um eine erste waagerechte Achse (36) wippbaren und um eine senkrechte Achse (25) schwenkbaren Förderer (49) gebracht und von dem Förderer (49) an einen nach oben fördernden Hebeförderer (9) übergeben wird, dadurch gekennzeichnet, daß im Bereich eines Beladeendes (56) des Förderers (49) ein Roboter (60) vorgesehen ist, und daß der Roboter (60) einen ein Stückgut (37) aus dem Raum (21) aufnehmenden und während des Transports zu einer Übergabeposition am Beladeende (56) des Förderers (49) haltenden Aufnehmer (66) aufweist.

5. Vorrichtung nach Anspruch 4, dadurch gekennzeichnet, daß die Übergabeposition sich oberhalb des Beladeendes (56) des Förderers (49) befindet.

6. Vorrichtung nach Anspruch 4, dadurch gekennzeichnet, daß die Übergabeposition sich oberhalb eines durch den Förderer (49) getragenen Vorsatzförderers (57) befindet.

7. Vorrichtung nach Anspruch 6, dadurch gekennzeichnet, daß der Vorsatzförderer (57) um eine in der Nähe des Beladeendes (56) des Förderers (49) angeordnete, zweite waagerechte Achse (58) wippbar ist.

8. Vorrichtung nach einem der Ansprüche 4 bis 7, dadurch gekennzeichnet, daß der Roboter (60) an einer an einem äußersten Teleskopteil (50) des Förderers (49) befestigten äußeren Haltevorrichtung (59) befestigt ist.

9. Vorrichtung nach einem der Ansprüche 4 bis 8, dadurch gekennzeichnet, daß an einem innersten Teleskopteil (48) des Förderers (49) eine innere Haltevorrichtung (46) befestigt ist,

daß ein freies Ende der inneren Haltevorrichtung (46) um die erste waagerechte Achse (36) wippbar gelagert ist, und

daß wenigstens ein Wippantrieb (35) einerseits im Abstand von der ersten waagerechten Achse (36) an der inneren Haltevorrichtung (46) und andererseits an einem um die senkrechte Achse (25) schwenkbar gelagerten Bauteil (34) der Vorrichtung angelenkt ist.

10. Vorrichtung nach Anspruch 9, dadurch gekennzeichnet, daß zum Teleskopieren des Förderers (49) zwischen der äußeren Haltevorrichtung (59) und der inneren Haltevorrichtung (46) wenigstens ein Scherengitter (77) angelenkt ist, und daß jedes Scherengitter (77) durch wenigstens einen Teleskopierantrieb (81;84) betätigbar ist.

11. Vorrichtung nach Anspruch 10, dadurch gekennzeichnet, daß zwei Teleskopierantriebe (81,81) einerseits jeweils an jedem Scherengitter (77) außerhalb dessen Längsachse (80) und andererseits an der inneren Haltevorrichtung (83,46) angelenkt sind.

12. Vorrichtung nach Anspruch 10 oder 11, dadurch gekennzeichnet, daß wenigstens ein Teleskopierantrieb (84) außerhalb einer Hauptebene jedes Scherengitters (77) einerseits an der äußeren Haltevorrichtung (59) und andererseits an einem auf der Längsachse (80) des Scherengitters (77) liegenden Mittelgelenk (79) des Scherengitters (77) angelenkt ist.

13. Vorrichtung nach einem der Ansprüche 4 bis 12, dadurch gekennzeichnet, daß der Förderer (49) um die erste waagerechte Achse (36) in eine steile Ruhestellung nach oben wippbar ist.

14. Vorrichtung nach einem der Ansprüche 4 bis 13, dadurch gekennzeichnet, daß die erste waagerechte Achse (36) an einem als Ring ausgebildeten, um die senkrechte Achse (25) schwenkbar gelagerten Bauteil (34) vorgesehen ist.

15. Vorrichtung nach einem der Ansprüche 4 bis 13, dadurch gekennzeichnet, daß die erste waagerechte Achse (36) an einem als um die senkrechte Achse (25) schwenkend verfahrbarer Wagen ausgebildeten Bauteil (34) vorgesehen ist.

16. Vorrichtung nach Anspruch 14, dadurch gekennzeichnet, daß das Bauteil (34) an einem unteren Fortsatz (19) des Hebeförderers (9) schwenkbar gelagert ist.

17. Vorrichtung nach einem der Ansprüche 4 bis 16, dadurch gekennzeichnet, daß das Stückgut (37) von dem Förderer (49) auf ein umlaufendes Drehelement (28) übergebbar ist, und daß das Stückgut (37) durch eine Übergabevorrichtung (31) von dem Drehelement (28) an den Hebeförderer (9) übergebbar ist.

18. Vorrichtung nach Anspruch 17, dadurch gekennzeichnet, daß das Drehelement (28) als zu der senkrechten Achse (25) und zu dem Hebeförderer (9) konzentrischer Drehring ausgebildet ist.

19. Vorrichtung nach Anspruch 18, dadurch gekennzeichnet, daß das Drehelement (28) auf einem Tragelement (26) drehend antreibbar gelagert ist, und daß das Tragelement (26) an einem stationären Zentralrohr (16) des Hebeförderers (9) befestigt ist.

20. Vorrichtung nach Anspruch 18 oder 19, dadurch gekennzeichnet, daß die Übergabevorrichtung (31) um die senkrechte Achse (25) im Winkelbereich eines innerhalb des Drehelements (28) angeordneten, das Stückgut (37) übernehmenden, waagerechten Kurvenförderers (29) schwenkbar ist, und daß das Stückgut (37) von dem Kurvenförderer (29) auf eine mit dem Kurvenförderer (29) konzentrische Kopfwendel (30) des Hebeförderers (9) übergebbar ist.

21. Vorrichtung nach einem der Ansprüche 4 bis 20, dadurch gekennzeichnet, daß mehrere jeweils teleskopierbare und jeweils um die erste waagerechte Achse (36) wippbare Förderer (49) um die senkrechte Achse (25) schwenkbar sind.

22. Vorrichtung nach einem der Ansprüche 4 bis 21, dadurch gekennzeichnet, daß der Roboter (60) einen Ausleger mit gelenkigen Armen (63,64;124,127,130) mit den nötigen Freiheitsgraden aufweist, und daß an dem freien Ende des Auslegers ein Kupplungsstück (65) für den Aufnehmer (66) vorgesehen ist.

23. Vorrichtung nach einem der Ansprüche 4 bis 22, dadurch gekennzeichnet, daß jeder Roboter (60) ein durch einen ersten Motor (121) um eine erste Achse (122) drehbares Fußstück (123) aufweist,

daß an dem Fußstück (123) ein erster Arm (124) um eine zu der ersten Achse (122) rechtwinklige zweite Achse (125) durch einen zweiten Motor (126) schwenkbar angelenkt ist,

daß an dem ersten Arm (124) ein zweiter Arm (127) um eine zu der zweiten Achse (125) parallele dritte Achse (128) durch einen dritten Motor (129) schwenkbar angelenkt ist,

daß an dem zweiten Arm (127) ein dritter Arm (130) um eine zu der dritten Achse (128) parallele vierte Achse (131) durch einen vierten Motor (132) schwenkbar angelenkt ist,

daß der dritte Arm (130) einen Anschlußteil (133) und einen Abtriebsteil (134) aufweist, wobei der Abtriebsteil (134) durch einen fünften Motor (135) relativ zu dem Anschlußteil (133) um eine zu der vierten Achse (131) rechtwinklige fünfte Achse (136) drehbar ist,

und daß an dem Abtriebsteil (134) ein Kupplungsstück (65) für den Aufnehmer (66) um eine zu der fünften Achse (136) rechtwinklige sechste Achse (137) durch einen sechsten Motor (138) schwenkbar angelenkt ist.

24. Vorrichtung nach Anspruch 23, dadurch gekennzeichnet, daß die fünfte Achse (136) zumindest annähernd in einer Ebene durch die Längsachse (139) des zweiten Arms (127) liegt.

25. Vorrichtung nach Anspruch 23 oder 24, dadurch gekennzeichnet, daß das Kupplungsstück (65) derart rechtwinklig ausgebildet ist, daß eine Hochachse (86) des mit dem Kupplungsstück (65) gekuppelten Aufnehmers (66) zumindest annähernd parallel zu einer Ebene durch die fünfte Achse (136) verläuft.

26. Vorrichtung nach einem der Ansprüche 4 bis 25, dadurch gekennzeichnet, daß der Aufnehmer (66) als Vakuumaufnehmer ausgebildet ist, und daß in den Vakuumaufnehmer eine Vakuumpumpe integriert ist.

27. Vorrichtung nach einem der Ansprüche 4 bis 25, dadurch gekennzeichnet, daß der Aufnehmer (66) einen das Stückgut (37) bei dessen Freigabe in einer Übergabeposition am Förderer (49) niederhaltenden Niederhalter (106) und relativ zu dem Niederhalter(106) in und außer Eingriff mit dem Stückgut (37) bewegbare Haltekrallen (67) aufweist.

28. Vorrichtung nach Anspruch 27, dadurch gekennzeichnet, daß die Haltekrallen (67) gegenüber der Senkrechten zu der Übergabeposition hin gekrümmt sind.

29. Vorrichtung nach Anspruch 27 oder 28, dadurch gekennzeichnet, daß die Haltekrallen (67) an wenigstens einem relativ zu dem Niederhalter (106) um eine Schwenkachse (107) schwenkbaren Arm (108) festgelegt sind.

30. Vorrichtung nach Anspruch 27 oder 28, dadurch gekennzeichnet, daß die Haltekrallen (67) an wenigstens einer, relativ zu dem Niederhalter (106) bewegbar an einer antreibbaren Parallelogrammführung (115) des Niederhalters (106) angelenkten Stange (114) festgelegt sind.

31. Vorrichtung nach Anspruch 29 oder 30, dadurch gekennzeichnet, daß bei mehreren Armen (108) zwischen benachbarten Armen (108) jeweils eine Traverse (109) des Niederhalters (106) angeordnet ist.

FIG.1

FIG.3

60 61 78 59 82 77 79
57 50 49 48 46 69 36 54 31 28 55 35 44 18 25 23 19 34 24 20 32 76 26

13 9 15 12 16 23

20
17 18 19 35 34 47 82 81 83 36 33 44 45 30 24 25 41 32 76

78 77 82 61 60 63 65 57 56 59 50 68 80 82 49 46 V 42 43 70 25 72
64 66 37 67 58 51 52 48 53 54 55 27 31 29 71 26 27 V
62 79

37

21

FIG. 2A

EP 0 317 788 A2

FIG. 4

FIG. 2B

21

EP 0 317 788 A2

FIG.5

FIG. 6

EP 0 317 788 A2

## FIG. 7

## FIG. 10

FIG.8

FIG.9

FIG. 11

FIG. 12

EP 0 317 788 A2